# EUROPÄISCHE PATENTSCHRIFT

(11) **EP 1 731 335 B1**
(45) Veröffentlichungstag und Bekanntmachung des Hinweises auf die Patenterteilung: **29.09.2010**
(21) Anmeldenummer: 06011713.2
(22) Anmeldetag: 07.06.2006
(51) Int. Cl.: B60G 17/052

(54) **Druckluftversorgungseinrichtung**
Compressed air supply device
Dispositif de distribution d'air comprimé

(30) Priorität: 08.06.2005 DE 102005026344
(43) Veröffentlichungstag der Anmeldung: 13.12.2006
(73) Patentinhaber: KNORR-BREMSE Systeme für Nutzfahrzeuge GmbH, 80809 München (DE)
(72) Erfinder: Hilberer, Eduard, 68766 Hockenheim (DE); Drienyovszki, Sandor, 1042 Budapest (HU)
(74) Vertreter: Schönmann, Kurt

(56) Entgegenhaltungen:
- EP-A- 0 170 794
- EP-A- 1 557 335
- DE-A1- 10 143 888
- DE-A1- 10 245 815
- DE-A1- 10 342 978
- US-A1- 2004 141 853
- US-A1- 2004 199 312

## Beschreibung

Die Erfindung betrifft eine Druckluftversorgungseinrichtung mit einer elektronischen Luftaufbereitungsanlage, die ein Ventilgehäuse aufweist, und einem Luftfederungsmodul.

Luftaufbereitungsanlagen dienen dazu, dem Bremssystem und sonstigen Druckluftverbrauchern von Nutzkraftfahrzeugen aufbereitete, das heißt insbesondere getrocknete, Druckluft zuzuführen. Die Trocknung der von einem Kompressor gelieferten Druckluft erfolgt in einer Trocknereinheit, die an der Oberseite eines Ventilgehäuses angeordnet ist. Das Ventilgehäuse beherbergt Komponenten, die für die Druckluftversorgung wesentlich sind, beispielsweise einen Druckregler, eine Mehrkreisschutzventilanordnung und eine elektronische Steuereinheit.

Der nächstliegende Stand der Technik US200440141853 offenbart eine Druckluftversorgungseinrichtung mit einer elektronischen Luftaufbereitungsanlage, die ein Ventilgehäuse und eine elektronische Steuerung aufweist, und einem Luftfederungsmodul.

Es sind solche Luftaufbereitungsanlagen bekannt, deren wesentliche Aufgabe, neben der Trocknung und Reinigung der Luft, darin besteht, das Bremssystem eines Nutzkraftfahrzeugs mit Druckluft zu versorgen. Neben dem Bremssystem sind in Nutzkraftfahrzeugen aber im Allgemeinen auch weitere Druckluftverbraucher vorgesehen, beispielsweise eine Luftfederung. Das Bremssystem selbst gliedert sich in zahlreiche Komponenten, beispielsweise unterteilt auf Zugfahrzeuge und Anhänger sowie die Feststellbremsen. Da bei der Druckluftversorgung verschiedener Verbraucher vergleichbare Aufgaben zu lösen sind, liegt ein allgemeines Bestreben dahingehend vor, die zur Lösung der Aufgaben verwendeten Komponenten weitgehend zu integrieren. Dem gegenüber ist man aber auch bestrebt, die Druckluftversorgungseinrichtungen für Nutzkraftfahrzeuge bezüglich ihrer Baugröße zu begrenzen, insbesondere, um bei üblicher Anordnung der Druckluftversorgungseinrichtung eine ausreichende Bodenfreiheit des Nutzkraftfahrzeugs sicherzustellen. Dies wird dadurch erschwert, dass sich die Bauhöhen von Ventilgehäuse und Trocknereinheit addieren, da die Trocknereinheit üblicherweise auf der Oberseite der Luftaufbreitungsanlage angeordnet ist.

Der Erfindung liegt die Aufgabe zugrunde, eine Druckluftversorgungseinrichtung zur Verfügung zu stellen, die ein hohes Maß an Integration realisiert und sich in bequemer Weise warten lässt.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut eine Druckluftversorgungseinrichtung dadurch auf, dass eine Flanschverbindung vorgesehen ist, über die das Ventilgehäuse mit dem Luftfederungsmodul verbunden ist, und dass die Flanschverbindung eine elektrische und eine pneumatische Schnittstelle zwischen der Luftaufbereitungsanlage und dem Luftfederungsmodul zur Verfügung stellt. Die Flanschverbindung, die aus Gründen der zur Verfügung stehenden Bauhöhe vorzugsweise seitlich an der Ventileinrichtung der Luftaufbereitungsanlage angeordnet ist, stellt eine elektrische und eine pneumatische Schnittstelle zur Verfügung, so dass die Verbindung zwischen dem Luftfederungsmodul und der Luftaufbereitungsanlage in einfacher Weise hergestellt und gelöst werden kann. Dies ermöglicht auch eine Reparatur beziehungsweise Wartung der Anlage im Feld.

Nützlicherweise ist vorgesehen, dass das Luftfederungsmodul zwei pneumatisch ansteuerbare Be- und Entlüftungs-2/2-Ventile zum Be- und Entlüften eines gemeinsamen Eingangsknotens zweier pneumatisch ansteuerbarer Versorgungs-2/2-Ventile aufweist, die mit Ausgängen für den Anschluss von Luftfederbälgen verbunden sind. Derartige pneumatisch ansteuerbare Ventile haben einen großen Strömungsquerschitt, um eine rasche Be- und Entlüftung der Luftfederbälge zu ermöglichen. Durch die Bereitstellung der jeweiligen Paare von 2/2-Ventilen wird die erforderliche Schaltfunktionalität zur Verfügung gestellt.

Es ist bevorzugt, dass an dem gemeinsamen Eingangsknoten ein Drucksensor angeschlossen ist. Über diesen Drucksensor lässt sich der für die Steuerungsangaben wesentliche Druck am Eingangsknoten der Versorgungs-2/2-Ventile messen.

Weiterhin kann vorgesehen sein, dass zum gemeinsamen Ansteuern der Be- und Entlüftungs-2/2-Ventile ein elektrisch betätigbares 3/2-Ventil vorgesehen ist. Ein einziges 3/2-Ventil zur Ansteuerung der Be- und Entlüftungsventile kann ausreichen, wenn in Kauf genommen wird, dass der Eingangsknoten der Versorgungsventile stets entweder mit der Versorgungsleitung oder der Entlüftungsleitung in Verbindung steht.

Es kann aber auch nützlich sein, dass zum individuellen Ansteuern der Be- und Entlüftungs-2/2-Ventile zwei elektrisch betätigbare 3/2-Ventile vorgesehen sind. Auf diese Weise können sowohl das Be- als auch das Entlüftungsventil geschlossen werden. Folglich kann bei geöffneten Versorgungsventilen der Druck in den Federbälgen genau gemessen werden.

In diesem Zusammenhang kann ausreichend sein, dass zum gemeinsamen Ansteuern der Versorgungs-2/2-Ventile ein elektrisch betätigbares 3/2-Ventil vorgesehen ist und dass die Ausgänge für den Anschluss von Luftfederbälgen über eine Querdrossel miteinander verbunden sind. Dann lassen sich die Versorgungsventile gleichzeitig öffnen, so dass der Druck in den Federbälgen gemeinsam gemessen wird.

Es kann aber auch von Vorteil sein, dass zum individuellen Ansteuern der Versorgungs-2/2-Ventile zwei elektrisch betätigbare 3/2-Ventile vorgesehen sind. Damit ist auch eine individuelle Messung des Drucks in den einzelnen Federbälgen möglich.

Es ist weiterhin vorteilhaft, dass das Luftfederungsmodul geeignet ist, über eine weitere Flanschverbindung mit einem Luftfederungsmodul für einen Anhänger verbunden zu werden, wobei die Flanschverbindung eine elektrische und eine pneumatische Schnittstelle zur Verfügung stellt. Die modulare Anordnung lässt sich insofern durch ein weiteres Modul ergänzen.

Insbesondere im Hinblick auf einen hohen Integrationsgrad ist es nützlich, dass die mit dem Luftfederungsmodul verbundenen Luftfederbälge über eine Zentralentlüftung des Luftaufbereitungsmoduls entlüftet werden.

Weiterhin ist vorteilhaft, dass in dem Ventilgehäuse der Luftaufbereitungsanlage eine elektronische Steuerung vorgesehen ist, die Steuerfunktionen für die Luftaufbereitungsanlage und für das Luftfederungsmodul wahrnimmt. Hierdurch gelingt es, die elektronische Steuerung des Moduls einfach zu gestalten oder ganz auf sie zu verzichten. Die elektronische Steuerung der Luftaufbereitungsanlage ist in der Lage, diese Steuerungsaufgaben des Moduls zu übernehmen. Steuersignale beziehungsweise von einer Sensorik des Moduls erfasste Signale werden über die elektrische Schnittstelle übermittelt. Über pneumatische Verbindungen der pneumatischen Schnittstelle kann Druckluft zu Steuerzwecken und zur Lieferung an Verbraucher überströmen.

Nützlich ist aber auch, dass in dem Luftfederungsmodul eine elektronische Steuerung vorgesehen ist, die Steuerfunktionen für das Luftfederungsmodul wahrnimmt. Insbesondere für Steuerfunktionen, die nicht ohne Weiteres in die Elektronik der Luftaufbereitungsanlage implementiert werden können, beziehungsweise für solche, die nützlicherweise redundant ausgeführt werden, ist es sinnvoll, das Modul selbst mit einer elektronischen Steuerung auszustatten.

In Weiterbildung dieses Gedankens, kann dann nützlicherweise vorgesehen sein, dass in dem Luftfederungsmodul eine elektronische Steuerung vorgesehen ist, die Steuerfunktionen der elektronischen Steuerung für die Luftaufbereitungsanlage ergänzt und/oder ersetzt. Auf dieser Grundlage können sich elektronische Steuerungen der einzelnen Einheiten ergänzen, ersetzen und/oder überwachen.

Weiterhin kann von Vorteil sein, dass für den Betrieb der Luftfederung verwendete Wegsensoren über einen Zentralstecker der Luftaufbereitungsanlage mit dieser verbunden sind. Es ist daher nicht erforderlich, dem Luftfederungsmodul eine weitere elektrische Schnittstelle zur Verfügung zu stellen, über die die Signale von Sensoren direkt zugeführt werden. Vielmehr können diese Signale über die elektrische Schnittstelle der Flanschverbindung weitergeleitet werden, oder es kann vorgesehen sein, die Signale direkt in der Steuerung der Luftaufbereitungsanlage zu verarbeiten und nur die entsprechenden Steuersignale an die Magnetventile der Luftaufbereitungsanlage über die elektrische Schnittstelle der Flanschverbindung weiterzuleiten.

In vorteilhafter Weise ist vorgesehen, dass im Bereich der Flanschverbindung mechanische Mittel vorgesehen sind, die die Verbindung zwischen dem Ventilgehäuse der Luftaufbereitungsanlage und dem Modul örtlich festlegen. Die mechanischen Verbindungen, beispielsweise Passstifte und entsprechende Führungen für diese, stellen sicher, dass die pneumatischen Verbindungen im Bereich der Schnittstelle nach außen zuverlässig abdichten und dass die elektrischen Steckverbindungen nicht in unzulässiger Weise mechanisch belastet werden.

Weiterhin kann nützlich sein, dass die Flanschverbindung direkt zwischen dem Ventilgehäuse und dem Luftfederungsmodul vorliegt, das heißt insbesondere ohne Zwischenplatte. Derartige Zwischenplatten zum Verbinden von Modulen sind bekannt. Sie dienen insbesondere dazu, durch geeignete Bohrungen und Kanäle die Strömungswege der Druckluft zwischen den Einheiten zu definieren. Beispielsweise kann man so durch den Einsatz unterschiedlicher Zwischenplatten unterschiedliche pneumatische Wege freigeben beziehungsweise sperren. Im Zusammenhang mit der vorliegenden Erfindung und insbesondere im Hinblick auf die Wartungsfreundlichkeit wird auf eine solche Zwischenplatte verzichtet. Vielmehr werden die Einheiten, das heißt Luftaufbereitungsanlagen und Module direkt mit den Bohrungen und Kanälen ausgestattet, die die geeigneten Verbindungen zur Verfügung stellen.

Der Erfindung liegt die Erkenntnis zugrunde, dass es gelingt, durch das spezielle Integrationskonzept von ELC-Modul und Luftaufbereitungsanlage eine vielseitige Druckluftversorgungseinrichtung zur Verfügung zu stellen, die sich im Hinblick auf ihre Baugröße und Bauform als praktisch erweist und die Grundlage für die Integration zahlreicher Möglichkeiten schafft. Im Hinblick auf die Integrationsfähigkeit ist beispielsweise noch zu erwähnen, dass Anschlüsse der Druckluftversorgungseinrichtung gemeinsam von allen Einheiten genutzt werden können, beispielsweise um bestimmte Spannungen an hierfür vorgesehene Klemmen anzulegen. Auch können bestimmte elektrische Baugruppen gemeinsam genutzt werden, beispielsweise im Hinblick auf die "on-bord"-Diagnose mit Hilfe des CAN-Busses und die "off-bord"-Diagnose sowie zur seriellen Kommunikation. Es lassen sich gemeinsame Netzteile zur Versorgung der Microcontroller und/oder der Drucksensoren vorsehen. Weiterhin ist eine gemeinsame Schutzbeschaltung der Anschlüsse des Zentralversorgungssteckers möglich.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm zur Erläuterung einer ersten Ausführungsform einer erfindungsgemäßen Druckluftversorgungseinrichtung;
- Figur 2: ein Schaltungsdiagramm zur Erläuterung einer zweiten Ausführungsform einer erfindungsgemäßen Druckluftversorgungseinrichtung;
- Figur 3: ein Schaltungsdiagramm zur Erläuterung einer dritten Ausführungsform einer erfindungsgemäßen Druckluftversorgungseinrichtung;
- Figur 4: ein Schaltungsdiagramm zur Erläuterung einer vierten Ausführungsform einer erfindungsgemäßen Druckluftversorgungseinrichtung;
- Figur 5: ein Blockdiagramm zur Erläuterung eines möglichen Funktionskonzeptes.
- Figur 6: eine erfindungsgemäße Druckluftversorgungseinrichtung, die in Luftaufbereitungsvorrichtung und ELC-Modul zerlegt ist, sowie daran angeschlossene Komponenten;

Bei der nachfolgenden Beschreibung der Zeichnungen bezeichnen gleiche Bezugszeichen gleiche oder vergleichbare Komponenten.

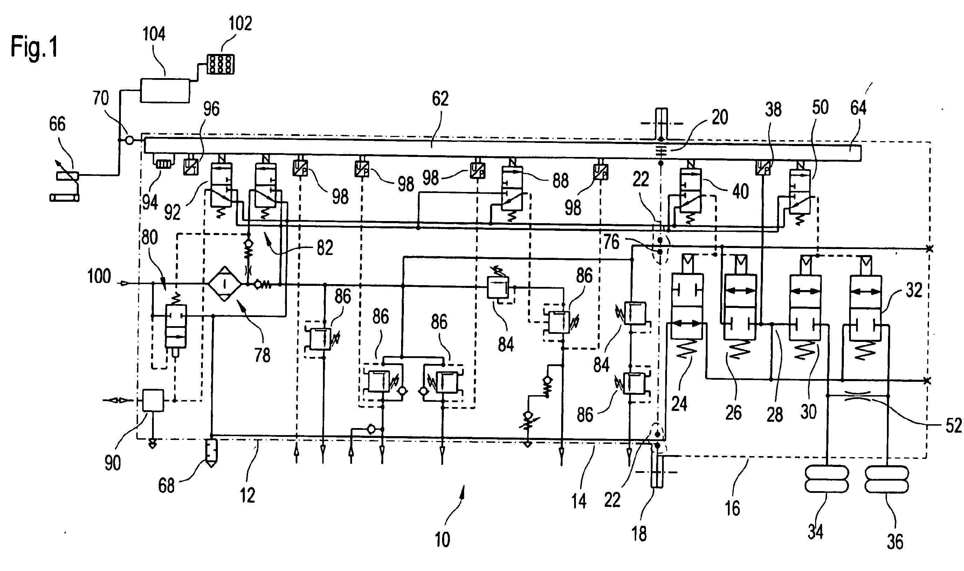

Figur 1 zeigt ein Schaltungsdiagramm zur Erläuterung einer ersten Ausführungsform einer erfindungsgemäßen Druckluftversorgungseinrichtung. Die Druckluftversorgungseinrichtung 10 umfasst eine Luftaufbereitungsanlage 12 und ein Luftfederungsmodul 16. Das Ventilgehäuse 14 der Luftaufbereitungsanlage 12 ist mit dem Luftfederungsmodul 16 über eine Flanschverbindung 18 verbunden. Diese Flanschverbindung 18 stellt eine elektrische Schnittstelle 20 zwischen einer Steuerung 62 der Luftaufbereitungsanlage 12 und einer Steuerung 64 des Luftfederungsmoduls 16 zur Verfügung. Weiterhin sind mittels Dichtungen 76 abgedichtete Druckluftverbindungen vorgesehen, die eine pneumatische Schnittstelle 22 bilden.

Die Luftaufbereitungsanlage 12 umfasst als zentrale Komponenten einen Trocknereinheit 78, einen Druckregler 80, eine Regenerationseinheit 82, mehrere Druckbegrenzer 84 und mehrere Überströmventile 86, wobei zumindest eines der Überströmventile zusätzlich mit einem von einem Magnetventil 88 gelieferten Druck ansteuerbar ist. Es sind ferner eine Schnellentlüftung 90 mit zugehörigem Magnetventil 92, eine Heizung 94, ein Temperatursensor 96, mehrere Drucksensoren 98 sowie verschiedenen Zwecken zugeordnete Rückschlagventile vorgesehen. Die von einem Drucklufteingang 100 gelieferte Druckluft wird nach Verarbeitung in der Luftaufbereitungsanlage über die als Mehrkreisschutzventil arbeitenden Überströmventile 96 an die verschiedenen Verbraucherkreise weitergeleitet, wobei dies von der elektronischen Steuerung 62 unter Verwendung der Sensorik gesteuert und überwacht wird. Bezüglich der weiteren Funktionsweise einer Luftaufbereitungsanlage wird beispielsweise auf die DE 103 42 978 A1 verwiesen, welche eine vergleichbare Symbolik verwendet.

Das Luftfederungsmodul 16 enthält ein Entlüftungs-2/2-Ventil 24, ein Belüftungs-2/2-Ventil 26 und zwei Versorgungs-2/2-Ventile 30, 32. Die Versorgungsmagnetventile 30, 32 sind mit Ausgängen verbunden, die zu Luftfederbälgen 34, 36 führen. Den Be- und Entlüftungs-2/2-Ventilen 24, 26 ist ein 3/2-Ventil 40 zugeordnet, welches die 2/2-Ventile gemeinsam ansteuert. In vergleichbarer Weise ist den Versorgungsventilen 30, 32 ein 3/2-Ventil 50 zugeordnet, das diese gemeinsam ansteuert. Die Ventile werden über eine pneumatische Schnittstelle 22 zur Luftaufbereitungsanlage 12 mit Steuerdruck und Versorgungsdruck beliefert, wobei die pneumatische Schnittstelle 22 auch eine Entlüftungsverbindung zur gemeinsamen Entlüftung 68 zur Verfügung stellt. Es ist ein Knoten 28 eingangsseitig der Versorgungsventile 30, 32 vorgesehen, an dem ein Drucksensor 38 angeschlossen ist. Weiterhin befindet sich zwischen den Ausgängen der Versorgungsventile 30, 32 eine Drossel 52, die einen Druckausgleich zwischen den Luftfederbälgen 34, 36, welche den verschiedenen Seiten der Hinterachse eines Nutzfahrzeugs zugeordnet sind, zulässt.

Durch geeignete Umschaltung der 3/2-Ventile 40, 50 lassen sich unterschiedliche Schaltzustände der 2/2-Ventile 24, 26, 30, 32 herbeiführen, wobei aufgrund der gemeinsamen Ansteuerung der Versorgungsventile 30, 32 durch das Magnetventil 50 diese nur gleichzeitig öffnen oder schließen lassen. Um unterschiedliche Drücke in den Luftfederbälgen 34, 36 auszugleichen, ist die Querdrossel 52 vorgesehen. Auch die Ventile 24, 26 lassen sich nur gleichzeitig umschalten, das heißt, dass entweder das Entlüftungsventil 24 eine Verbindung des Knotens 28 mit der Entlüftung zur Verfügung stellt oder das Belüftungsventil 26 eine Verbindung des Vorratsdrucks mit dem Knoten 28 zur Verfügung stellt. Die Steuerung des Luftfederungsmoduls erfolgt unter Kommunikation zwischen der Steuerung 62 der Luftaufbereitungsanlage 12 und der dem Luftfederungsmodul 16 eigenen Steuerung 64, wobei verschiedene Sensorsignale, wie diejenigen eines Drucksensors 68 oder eines Wegsensors 66, berücksichtigt werden. Der Wegsensor 66 ist über den Zentralstecker 70 der Luftaufbereitungsanlage 12 mit der Druckluftversorgungseinrichtung 10 verbunden. Ebenfalls ist eine Fernbedienung 102 über eine Steuerung 104 an den Zentralstecker 70 angeschlossen.

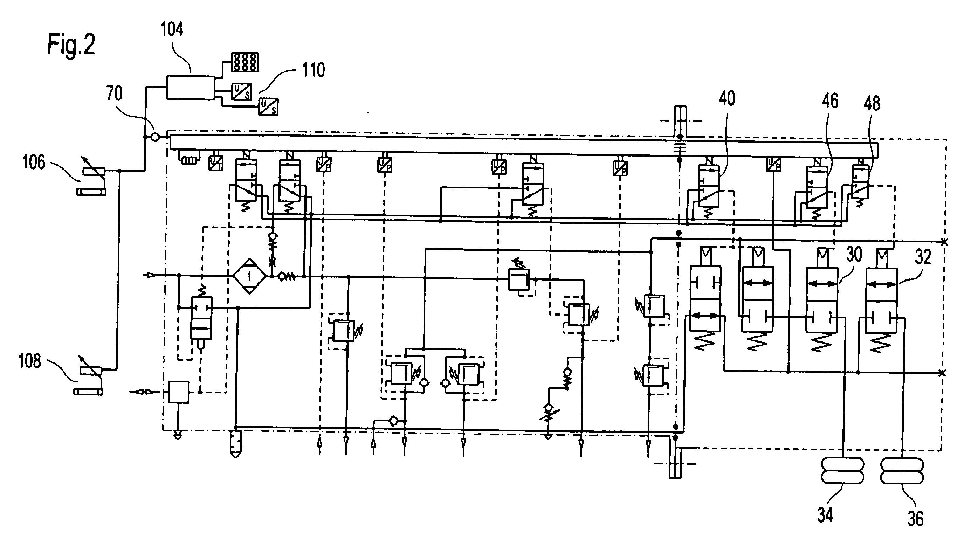

Figur 2 zeigt ein Schaltungsdiagramm zur Erläuterung einer zweiten Ausführungsform einer erfindungsgemäßen Druckluftversorgungseinrichtung. Die hier dargestellt Ausführungsform unterscheidet sich von der Ausführungsform gemäß Figur 1 dadurch, dass die Versorgungs-2/2-Ventile 30, 32 individuell durch 3/2-Ventile 46 beziehungsweise 48 ansteuerbar sind. Die in Figur 1 noch vorgesehene Querdrossel 52 kann daher entfallen. Vielmehr werden mittels zweier Wegsensoren die Niveaus der verschiedenen Fahrzeugseiten ermittelt, und die Steuerung kann durch individuelles Be- und Entlüften der Federbälge 34, 36 in Abhängigkeit eines gewünschten Niveaus reagieren. Zusätzlich ist eine weitere Sensorik 110 vorgesehen, deren Signale dem Zentralstecker 70 über die Steuereinheit 104 zugeleitet werden.

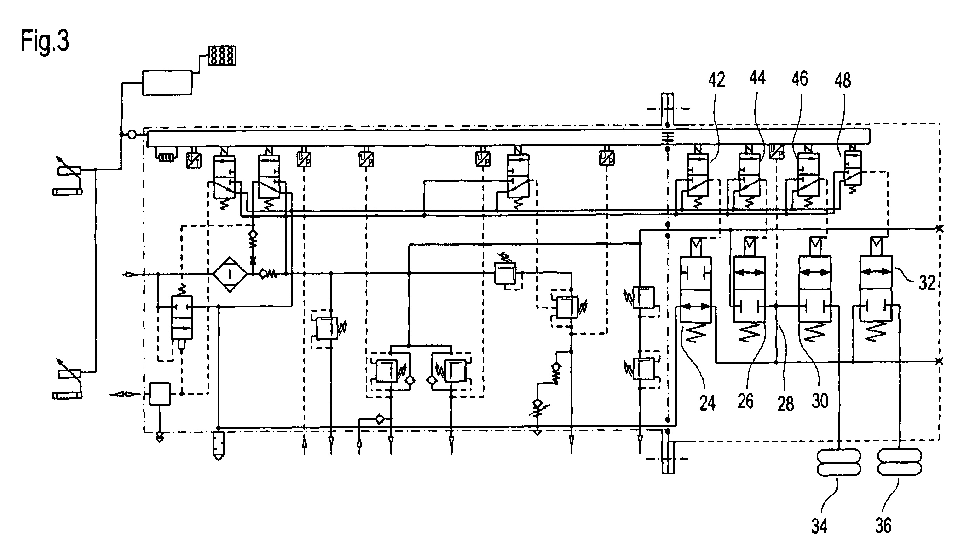

Figur 3 zeigt ein Schaltungsdiagramm zur Erläuterung einer dritten Ausführungsform einer erfindungsgemäßen Druckluftversorgungseinrichtung. Die hier dargestellte Druckluftversorgungseinrichtung 10 unterschiedet sich von der in Figur 2 dargestellten Einrichtung im Wesentlichen dadurch, dass nun das Entlüftungs-2/2-Ventil 24 separat durch ein 3/2-Ventil 42 sowie das Belüftungs-2/2-Ventil 26 separat durch ein 3/2-Ventil 44 angesteuert werden. Hierdurch ist es möglich, sowohl die Entlüftung als auch die Belüftung von dem Knoten 28 zu entkoppeln. Auf diese Weise kann bei geeigneter Einstellung der Versorgungs-2/2-Ventile 30, 32 individuell der Druck in den Federbälgen 34, 36 gemessen werden.

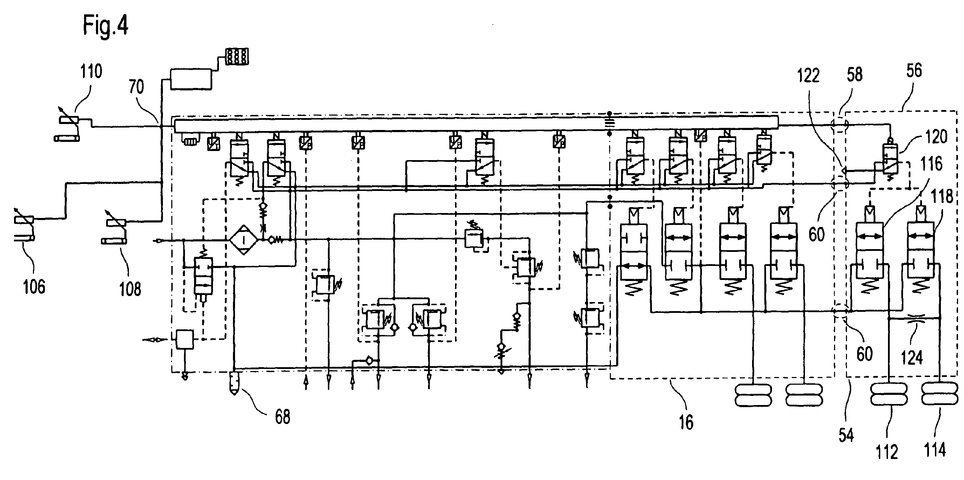

Figur 4 zeigt ein Schaltungsdiagramm zur Erläuterung einer vierten Ausführungsform einer erfindungsgemäßen Druckluftversorgungseinrichtung. Das hier dargestellt Ausführungsbeispiel ergänzt die im Zusammenhang mit Figur 3 beschriebene Ausführungsform. An den Luftfederungsmodul 16 ist ein weiteres Modul 56 für eine Vorderachse angeordnet, wobei zu diesem Zweck wiederum eine elektrische 58 und eine pneumatische 60 Schnittstelle zur Verfügung gestellt wird, vorzugsweise wieder im Rahmen einer Flanschverbindung 54. Zur Niveaumessung im Bereich der Vorderachse ist ein weiterer Wegsensor 110 vorgesehen, der ebenfalls am Zentralstecker 70 angeschlossen ist. Die Federbälge 112, 114 werden über Versorgungs-2/2-Ventile 116, 118 mit Druckluft versorgt, wobei diese gemeinsam durch ein 3/2-Ventil 120 ansteuerbar sind. Die von dem 3/2-Ventil 120 ausgehende Entlüftung 122 kann entweder direkt am Vorderachsmodul 56 angeordnet sein oder in die gemeinsame Entlüftung 68 integriert sein. Da die Versorgungs-2/2-Ventile 116, 118 nur gemeinsam ansteuerbar sind, ist zum Druckausgleich zwischen den Luftfederbälgen 112, 114 wiederum eine Querdrossel 124 vorgesehen.

Alternativ zur Flanschverbindung 54 zwischen dem Luftfederungsmodul 16 und dem Luftfederungsmodul 56 ist es auch möglich, die Funktionen dieser Module in einem Modul zu vereinigen.

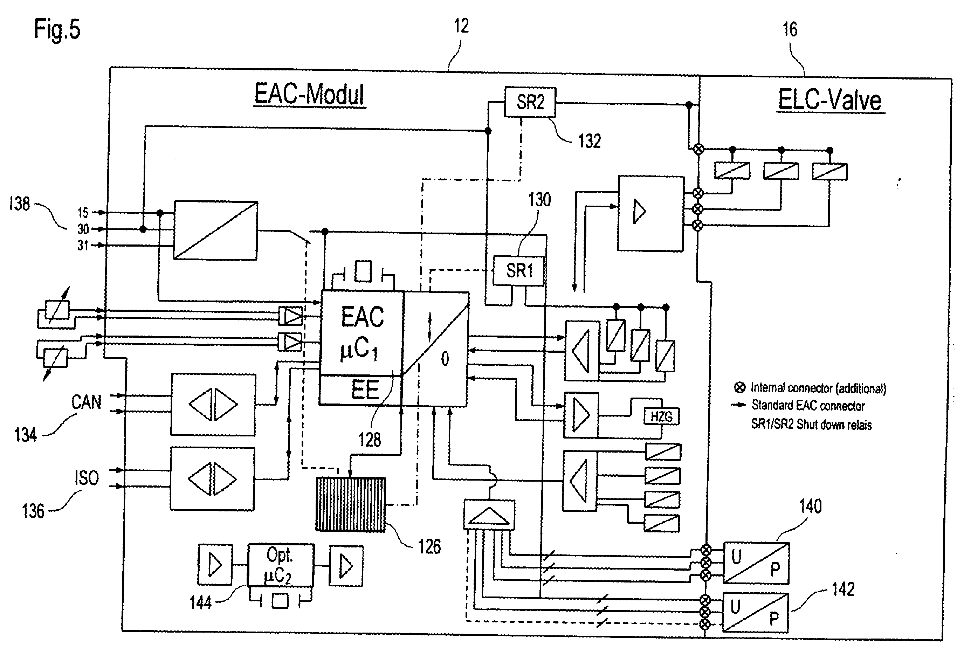

Figur 5 zeigt ein Blockdiagramm zur Erläuterung eines möglichen Funktionskonzeptes. Es ist ein Watch-Dog-Timer 126 vorgesehen, der in regelmäßigen Zeitabschitten von dem Microcontroller 128 zurückgesetzt wird. Bleibt das Rücksetzsignal des Microcontrollers 128 aus, so wird das Steuergerät abgeschaltet, indem die Spannungsversorgung des Microcontrollers 128 unterbrochen wird. Weiterhin wird ein Sicherheitsrelais 130 hierdurch die Spannungsversorgung der verschiedenen Magnetventile unterbrechen. Ebenfalls ist ein zweites Sicherheitsrelais 132 vorgesehen. Dieses ermöglicht das Abschalten der Spannungsversorgung für die Magnetventile des Luftfederungsmoduls 16. Weiterhin sind eine CAN-Schnittstelle 134 und eine ISO-Schnittstelle 136 erkennbar, die mit dem Microcontroller 128 verbunden sind. Für den Anschluss von Batterie und Zündung sind diverse Klemmen 138 vorgesehen. Im vorliegenden Beispiel sind zwei Sensoren 140, 142 für die Messung der Drücke in den Luftfederbälgen der Hinterachse vorgesehen. Im Zusammenhang mit den vorstehenden Ausführungsformen wurde erläutert, dass bei geeigneter Ventilbeschaltung ein einziger Drucksensor ausreichen kann um durch diesen im Multiplexbetrieb beide Drücke zu überwachen. Weiterhin ist in der Luftaufbereitungsanlage 12 ein zusätzlicher Mikroprozessor 144 zum Zwecke der Redundanz angeordnet. Derartige Redundanzaufgaben kann auch ein im Luftfederungsmodul 16 angeordneter Mikroprozessor übernehmen.

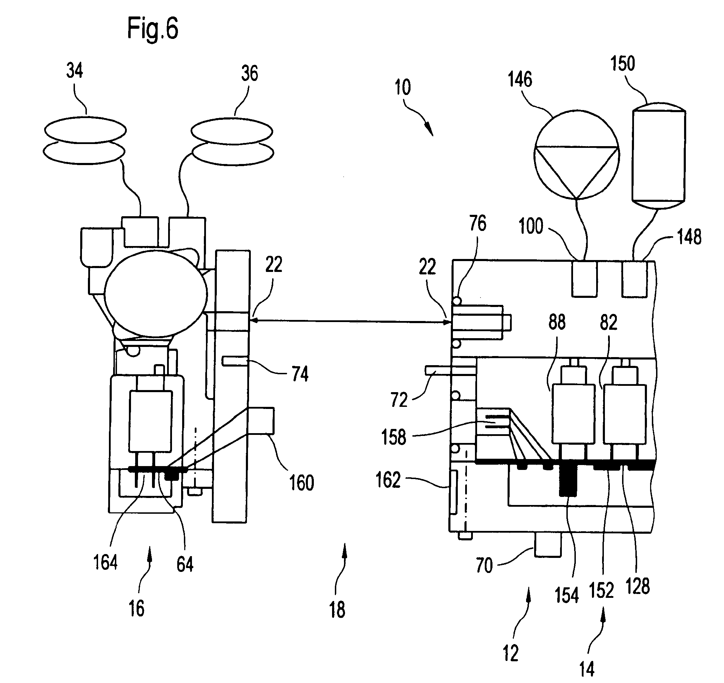

Figur 6 zeigt eine erfindungsgemäße Druckluftversorgungseinrichtung, die in Luftaufbereitungsvorrichtung 12 und ELC-Modul, das heißt Luftfederungsmodul 16, zerlegt ist, sowie daran angeschlossene Komponenten. Das Ventilgehäuse 14 der Luftaufbereitungsanlage 12 hat pneumatische und elektrische Eingänge und Ausgänge, wobei zunächst die Eingänge und Ausgänge erläutert werden, die außerhalb der Flanschverbindung 18 zu dem ELC-Modul 16 liegen. Über den Drucklufteingang 100 wird von einem Kompressor 146 Druckluft zugeführt. Es ist ein Druckluftausgang 148 vorgesehen, wobei die Druckluft aus dem Druckluftausgang 148 zu einem Vorratsbehälter 150 der Betriebsbremse geleitet wird. Weiterhin ist ein zentraler elektrischer Stecker 70 vorgesehen, über den der Einheit 12 verschiedene Spannungen zuführbar sind und über den Kommunikationssignale austauschbar sind. Innerhalb des Ventilgehäuses 14 ist eine Leiterplatte 152 angeordnet, die die elektronische Steuerung 62 der Luftaufbereitungsanlage 12 beherbergt. Auf der Leiterplatte 152 sitzen verschiedene Komponenten, beispielsweise CAN- und ISO-Schnittstellen 154, ein Netzteil 156, ein zentraler Microcontroller 128 sowie verschiedene Magnetventile 82, 88.

Es liegt eine pneumatische Verbindung 22 zwischen dem Ventilgehäuse 14 und dem ELC-Modul 16 vor, die über Dichtungen 76 abgedichtet ist. Die elektrische Schnittstelle wird durch ein Vaterteil 158 und ein Mutterteil 160 in einem Gehäusevorsprung gebildet.

Die Schnittstelle im Bereich der Flanschverbindung 18 kann jeweils mehrere elektrische Steckverbindungen und mehrere pneumatische Verbindungen aufweisen. Weiterhin können Luftkanäle im Bereich der Flanschverbindung 18 vorgesehen sein, wie beispielsweise der gezeigte Luftkanal 162. Um eine sichere örtliche Fixierung der Flanschverbindung 18 zur Verfügung zu stellen, sind Fixierstifte 72 und jeweils zugeordnete Führungen 74 vorgesehen, wobei nur beispielhaft ein Paar solcher Fixiereinrichtungen gezeigt ist.

Das ELC-Modul 16 beherbergt eine Leiterplatte 164, die elektronische Komponenten des ELC-Moduls und gegebenenfalls eine elektronische Steuerung 64 des ELC-Moduls trägt. An dem ELC-Modul sind Luftfederbälge 34, 36 angeschlossen, die je nach Auslegung des ELC-Moduls 16 gemeinsam oder getrennt be- und entlüftet werden können.

### Bezugszeichenliste

- 10: Druckluftversorgungseinrichtung
- 12: Luftaufbereitungsanlage
- 14: Ventilgehäuse
- 16: ELC-Modul
- 18: Flanschverbindung
- 20: elektrische Schnittstelle
- 22: pneumatische Verbindung
- 24: Entlüftungs-2/2-Ventil
- 26: Belüftungs-2/2-Ventil
- 28: Knoten
- 30, 32: Versorgungs-2/2-Ventile
- 34, 36: Luftfederbälge
- 38: Drucksensor
- 40: 3/2-Ventil
- 50: Magnetventil
- 52: Drossel
- 54: Flanschverbindung
- 56: Luftfederungsmodul
- 62, 64: Steuerung
- 66: Wegsensor
- 68: Entlüftung
- 70: Zentralstecker
- 72, 74: mechanische Mittel
- 74: Führungen
- 76: Dichtungen
- 80: Druckregler
- 82: Regenerationseinheit
- 84: Druckbegrenzer
- 86: Überströmventile
- 92: Magnetventile
- 100: Drucklufteingang
- 104: Steuereinheit
- 112, 114: Luftfederbälge
- 120: 3/2-Ventil
- 128: Microcontroller
- 130: Sicherheitsrelais
- 132: Sicherheitsrelais
- 134: CAN-Schnittstelle
- 136: ISO-Schnittstelle
- 140, 142: Sensoren
- 144: Mikroprozessor
- 146: Kompressor
- 148: Druckluftausgang
- 150: Vorratsbehälter
- 158: Vaterteil
- 160: Mutterteil
- 162: Luftkanal
- 164: Leiterplatte

## Patentansprüche

1. Druckluftversorgungseinrichtung (10) mit einer elektronischen Luftaufbereitungsanlage (12), die ein Ventilgehäuse (14) und eine elektronische Steuerung aufweist, und einem Luftfederungsmodul (16), wobei eine Flanschverbindung (18) vorgesehen ist, über die das Ventilgehäuse (14) mit dem Luftfederungsmodul (16) verbunden ist, wobei die Flanschverbindung (18) eine elektrische (20) und eine pneumatische (22) Schnittstelle zwischen der Luftaufbereitungsanlage (12) und dem Luftfederungsmodul (16) zur Verfügung stellt und wobei in dem Luftfederungsmodul (16) eine elektronische Steuerung (64) vorgesehen ist, die Steuerfunktionen für das Luftfederungsmodul (16) wahrnimmt.

2. Druckluftversorgungseinrichtung mit einer elektronschen Luftaufbereitungsanlage nach Anspruch 1, **dadurch gekennzeichnet, dass** das Luftfederungsmodul zwei pneumatisch ansteuerbare Be- und Entlüftungs-2/2-Ventile (24, 26) zum Be- und Entlüften eines gemeinsamen Eingangsknotens (28) zweier pneumatisch ansteuerbarer Versorgungs-2/2-Ventile (30, 32) aufweist, die mit Ausgängen für den Anschluss von Luftfederbälgen (34, 36) verbunden sind.

3. Druckluftversorgungseinrichtung mit einer elektronischen Luftaufbereitungsanlage nach Anspruch 2, **dadurch gekennzeichnet, dass** an dem gemeinsamen Eingangsknoten ein Drucksensor (38) angeschlossen ist.

4. Druckluftversorgungseinrichtung mit einer elektronischen Luftaufbereitungsanlage nach Anspruch 2 oder 3, **dadurch gekennzeichnet, dass** zum gemeinsamen Ansteuern der Be- und Entlüftungs-2/2-Ventile (24, 26) ein elektrisch betätigbares 3/2-Ventil (40) vorgesehen ist.

5. Druckluftversorgungseinrichtung mit einer elektronischen Luftaufbereitungsanlage nach Anspruch 2 oder 3, **dadurch gekennzeichnet, dass** zum individuellen Ansteuern der Be- und Entlüftungs-2/2-Ventile (24, 26) zwei elektrisch betätigbare 3/2-Ventile (42, 44) vorgesehen sind.

6. Druckluftversorgungseinrichtung mit einer elektronischen Luftaufbereitungsanlage nach einem der Ansprüche 2 bis 5, **dadurch gekennzeichnet, dass** zum gemeinsamen Ansteuern der Versorgungs-2/2-Ventile (30, 32) ein elektrisch betätigbares 3/2-Ventil (50) vorgesehen ist und dass die Ausgänge für den Anschluss von Luftfederbälgen über eine Querdrossel (52) miteinander verbunden sind.

7. Druckluftversorgungseinrichtung mit einer elektronischen Luftaufbereitungsanlage nach einem der Ansprüche 2 bis 5, **dadurch gekennzeichnet, dass** zum individuellen Ansteuern der Versorgungs-2/2-Ventile (30, 32) zwei elektrisch betätigbare 3/2-Ventile (46, 48) vorgesehen sind.

8. Druckluftversorgungseinrichtung mit einer elektronischen Luftaufbereitungsanlage nach einem der vorhergehenden Ansprüche, **dadurch gekennzeichnet, dass** das Luftfederungsmodul geeignet ist, über eine weitere Flanschverbindung (54) mit einem Luftfederungsmodul (56) für eine weitere Achse verbunden zu werden, wobei die Flanschverbindung eine elektrische (58) und eine pneumatische (60) Schnittstelle zur Verfügung stellt.

9. Druckluftversorgungseinrichtung mit einer elektronischen Luftaufbereitungsanlage nach einem der vorhergehenden Ansprüche, **dadurch gekennzeichnet, dass** die mit dem Luftfederungsmodul verbundenen Luftfederbälge über eine Zentralentlüftung (68) des Luftaufbereitungsmöduls (16) entlüftet werden.

10. Druckluftversorgungseinrichtung mit einer elektronischen Luftaufbereitungsanlage nach einem der vorhergehenden Ansprüche, **dadurch gekennzeichnet, dass** in dem Ventilgehäuse der Luftaufbereitungsanlage eine elektronische Steuerung (62) vorgesehen ist, die Steuerfunktionen für die Luftaufbereitungsanlage (12) und für das Luftfederungsmodul (16) wahrnimmt.

11. Druckluftversorgungseinrichtung mit einer elektronischen Luftaufbereitungsanlage nach einem der vorhergehenden Ansprüche, **dadurch gekennzeichnet, dass** in dem Luftfederungsmodul (16) eine elektronische Steuerung (64) vorgesehen ist, die Steuerfunktionen der elektronischen Steuerung (62) für die Luftaufbereitungsanlage (12) ergänzt und/oder ersetzt.

12. Druckluftversorgungseinrichtung mit einer elektronischen Luftaufbereitungsanlage nach einem der vorhergehenden Ansprüche; **dadurch gekennzeichnet, dass** für den Betrieb der Luftfederung verwendete Wegsensoren (66) über einen Zentralstecker (70) der Luftaufbereitungsanlage mit dieser verbunden sind.

13. Druckluftversorgungseinrichtung mit einer elektronischen Luftaufbereitungsanlage nach einem der vorhergehenden Ansprüche, **dadurch gekennzeichnet, dass** im Bereich der Flanschverbindung (18) mechanische Mittel (72, 74) vorgesehen sind, die die Verbindung zwischen dem Ventilgehäuse (14) der Luftaufbereitungsanlage (12) und dem Luftfederungsmodul (16) örtlich festlegen.

14. Druckluftversorgungseinrichtung mit einer elektronischen Luftaufbereitungsanlage nach einem der vorhergehenden Ansprüche, **dadurch gekennzeichnet, dass** die Flanschverbindung (18) direkt zwischen dem Ventilgehäuse (14) und dem Luftfederungsmodul (16) vorliegt, das heißt insbesondere ohne Zwischenplatte.

## Claims

1. Compressed-air supply unit (10) including an electronic air-processing system (12), which comprises a valve housing (14) and an electronic controller, and including a pneumatic suspension module (16), with a flange connection (18) being provided via which said valve housing (14) is connected to said pneumatic suspension module (16), wherein said flange connection (18) provides an electrical (20) and a pneumatic (22) interface between said air-processing system (12) and said pneumatic suspension module (16) and wherein an electronic controller (64) is provided in said pneumatic suspension module (16) for performing the control functions for said pneumatic suspension module (16).

2. Compressed-air supply unit including an electronic air-processing system according to Claim 1, **characterised in that** said pneumatic suspension module comprises two pneumatically controllable aerating and de-aerating 2/2 valves (24, 26) for aerating and de-aerating a common inlet node (28) of two pneumatically controllable supply 2/2 valves (30, 32) connected to outlets for the connection of pneumatic suspension bellows (34, 36).

3. Compressed-air supply unit including an electronic air-processing system according to Claim 1 or 2, **characterised in that** a pressure sensor (38) is connected to said common inlet node.

4. Compressed-air supply unit including an electronic air-processing system according to Claim 2 or 3, **characterised in that** an electrically operable 3/2 valve (40) is provided for joint control of said aerating and de-aerating 2/2 valves (24, 26).

5. Compressed-air supply unit including an electronic air-processing system according to Claim 2 or 3, **characterised in that** two electrically operable 3/2 valves (42, 44) are provided for individual control of said aerating and de-aerating 2/2 valves (24, 26).

6. Compressed-air processing system including an electronic air-processing system according to any of the Claims 2 to 5, **characterised in that** an electrically operable 3/2 valve (50) is provided for joint control of said supply 2/2 valves (30, 32), and that the outlets for the connection of pneumatic suspension bellows are connected to each other via a lateral throttle (52).

7. Compressed-air processing system including an electronic air-processing system according to any of the Claims 2 to 5, **characterised in that** two electrically operable 3/2 valves (46, 48) are provided for individual control of said supply 2/2 valves (30, 32).

8. Compressed-air supply unit including an electronic air-processing system according to any of the preceding Claims, **characterised in that** said pneumatic suspension module is suitable for connection via another flange connector to a pneumatic suspension module (56) for another axle, with said flange connector providing an electrical (58) and a pneumatic (60) interface.

9. Compressed-air supply unit including an electronic air-processing system according to any of the preceding Claims, **characterised in that** said pneumatic suspension bellows connected to said pneumatic suspension module are de-aerated via a central de-aerating means (68) of said air-processing module (16).

10. Compressed-air supply unit including an electronic air-processing system according to any of the preceding Claims, **characterised in that** an electronic controller (62) is provided in the valve housing of said air-processing system, which performs the control functions for said air-processing system (12) and for said pneumatic suspension module (16).

11. Compressed-air supply unit including an electronic air-processing system according any of the preceding Claims, **characterised in that** an electronic controller (64) is provided in said pneumatic suspension module (16), which is supplementary to and/or substitutes the control functions of said electronic controller (62) for said air-processing system (12).

12. Compressed-air supply unit including an electronic air-processing system according to any of the preceding Claims, **characterised in that** distance sensors (66) employed for the operation of the pneumatic suspension system are connected to said air-processing system via a central plug (70) of the air-processing system.

13. Compressed-air supply unit including an electronic air-processing system according to any of the preceding Claims, **characterised in that** mechanical means (72, 74) are provided in the zone of said flange connector (18), which fasten the connection between said valve housing (14) of said air-processing system (12) and said pneumatic suspension module (16).

14. Compressed-air supply unit including an electronic air-processing system according to any of the preceding Claims, **characterised in that** said flange connector (18) is provided between said valve housing (14) and said pneumatic suspension module (16) directly, which means without an intermediate plate in particular.

## Revendications

1. Dispositif de distribution d'air comprimé (10) comprenant un système électronique de traitement d'air (12), qui comprend une cage de soupape (14) et une unité de commande électronique, et comprenant un module de suspension pneumatique (16), à une connexion à brides (18) étant disposée, via laquelle ladite cage de soupape (14) est reliée audit module de suspension pneumatique (16), dans lequel ladite connexion à brides (18) représente une jonction électrique (20) et pneumatique (22) entre ledit système de traitement d'air (12) et ledit module de suspension pneumatique (16) et dans lequel une unité de commande électronique (64) est formée dans ledit module de suspension pneumatique (16) afin de réaliser les fonctions de commande pour ledit module de suspension pneumatique (16).

2. Dispositif de distribution d'air comprimé comprenant un système électronique de traitement d'air selon la revendication 1, **caractérisé en ce que** ledit module de suspension pneumatique comprend deux soupapes à 2/2 voies d'aération et de purge d'air (24, 26) à commande pneumatique pour l'aération et la purge d'air un noeud d'entrée en commun (28) de deux soupapes à 2/2 voies de distribution (30, 32) à commande pneumatique, qui sont raccordées aux sorties pour la connexion des soufflets de suspension pneumatique (34, 36).

3. Dispositif de distribution d'air comprimé comprenant un système électronique de traitement d'air selon la revendication 1 ou 2, **caractérisé en ce qu'**un détecteur de pression (38) est raccordé audit noeud d'entrée en commun.

4. Dispositif de distribution d'air comprimé comprenant un système électronique de traitement d'air selon la revendication 2 ou 3, **caractérisé en ce qu'**une soupape à 3/2 voies à commande électrique (40) est disposée pour la commande en commun desdites soupapes à 2/2 voies d'aération et de purge d'air (24, 26).

5. Dispositif de distribution d'air comprimé comprenant un système électronique de traitement d'air selon la revendication 2 ou 3, **caractérisé en ce** deux soupapes à 3/2 voies à commande électrique (42, 44) sont disposées pour la commande individuelle desdites soupapes à 2/2 voies d'aération et de purge d'air (24, 26).

6. Dispositif de distribution d'air comprimé comprenant un système électronique de traitement d'air selon une quelconque des revendications 2 à 5, **caractérisé en ce qu'**une soupape à 3/2 voies à commande électrique (50) est disposée pour la commande en commun desdites soupapes à 2/2 voies de distribution (30, 32), et **en ce que** les sorties pour la connexion des soufflets de suspension pneumatique sont raccordées l'une à l'autre via un moyen d'étranglement latéral (52).

7. Dispositif de distribution d'air comprimé comprenant un système électronique de traitement d'air selon une quelconque des revendications 2 à 5, **caractérisé en ce que** deux soupapes à 3/2 voies à commande électrique (46, 48) sont montées pour la commande individuelle desdites soupapes de distribution à 2/2 voies (30, 32).

8. Dispositif de distribution d'air comprimé comprenant un système électronique de traitement d'air selon une quelconque des revendications précédentes, **caractérisé en ce que** ledit module de suspension pneumatique se prête à la connexion via une autre connexion à brides à un module de suspension pneumatique (56) pour un autre essieu, à ladite connexion à brides représentant une jonction électrique (58) et pneumatique (60).

9. Dispositif de distribution d'air comprimé comprenant un système électronique de traitement d'air selon une quelconque des revendications précédentes, **caractérisé en ce que** lesdits soufflets de suspension pneumatique raccordés audit module de suspension pneumatique sont désaéré via un moyen de désaération central (68) dudit module de traitement d'air (16).

10. Dispositif de distribution d'air comprimé comprenant un système électronique de traitement d'air selon une quelconque des revendications précédentes, **caractérisé en ce qu'**une unité de commande électronique (62) est disposée dans la cage de soupape dudit système de traitement d'air, qui réalise les fonctions de commande pour ledit système de traitement d'air (12) et pour ledit module de suspension pneumatique (16).

11. Dispositif de distribution d'air comprimé comprenant un système électronique de traitement d'air selon une quelconque des revendications précédentes, **caractérisé en ce qu'**une unité de commande électronique (64) est formée dans ledit module de suspension pneumatique (16), qui est supplémentaire à et/ou remplace les fonctions de commande de ladite unité de commande électronique (62) pour ledit système de traitement d'air (12).

12. Dispositif de distribution d'air comprimé comprenant un système électronique de traitement d'air selon une quelconque des revendications précédentes, **caractérisé en ce que** des détecteurs de distance (66) employés pour le fonctionnement du système pneumatique de suspension sont reliés audit système de traitement d'air via un connecteur central (70) du système de traitement d'air.

13. Dispositif de distribution d'air comprimé comprenant un système électronique de traitement d'air selon une quelconque des revendications précédentes, **caractérisé en ce que** des moyens mécaniques (72, 74) sont disposés dans la zone de ladite connexion à brides (18), qui localisent la connexion entre ladite cage de soupape (14) dudit système de traitement d'air (12) et ledit module de suspension pneumatique (16).

14. Dispositif de distribution d'air comprimé comprenant un système électronique de traitement d'air selon une quelconque des revendications précédentes, **caractérisé en ce que** ladite connexion à brides (18) est disposée entre ladite cage de soupape (14) et ledit module de suspension pneumatique (16) directement, c'est-à-dire sans aucune plaque intermédiaire en particulier.
